# EUROPEAN PATENT APPLICATION

(11) **EP 1 145 613 A1**
(43) Date of publication of application: **17.10.2001**
(21) Application number: 01200997.3
(22) Date of filing: 19.03.2001
(51) Int. Cl.: A01B 59/00

(54) **Automatic hook typically for lifting units of agricultural tractors**

(30) Priority: 10.04.2000 IT RE000029
(71) Applicant: I.S.I. S.R.L., 42018 S. Martino in Rio (IT)
(72) Inventor: Ganzerla, Carlo, c/o I.S.I. S.R.L., 42018 San Martino in Rio (Reggio Emilia) (IT); Lirani, Nicola, c/o I.S.I. S.R.L., 42018 San Martino in Rio (Reggio Emilia) (IT); Farioli, Ernesto, c/o I.S.I. S.R.L., 42018 San Martino in Rio (Reggio Emilia) (IT)
(74) Representative: Corradini, Corrado

(57) **Abstract**

An automatic hook for the lifting devices of agricultural tractors, comprising a hook-shaped one-piece body (1) provided with a coupling seat (4) for a ball joint (5), and a shutter (7) arranged to partially obstruct, and to completely free, said coupling seat by the effect of elastic positioning means and, respectively, of externally operable release means, the shutter comprising a substantially cylindrical body which is coplanar with said one-piece body, is positioned tangential to the rear region of said coupling seat for the ball joint, and is slidingly received in a housing (6) in the one-piece body, in which said elastic means are also received, and at which said release means terminate.

## Description

This invention relates to an automatic hook to be fixed to the free end of one of the arms of a tractor rear lifting device.

For such lifting devices, hooks are already known for automatically receiving the ball joint or ball-shaped bush of an agricultural implement, and for maintaining it automatically locked.

A typical example of such automatic hooks is described in Utility Model Patent No. 00224647 in the name of the present Applicant.

The hook of said document, to which reference should be made for greater details, comprises a hook-shaped one-piece flat metal body forming the coupling seat for the ball joint.

From the upper edge of said one-piece body there upwardly projects a coplanar ridge presenting two T-shaped enlargements, of which one is close to said coupling seat for the ball joint and the other is situated at the rear end of the one-piece body.

The ridge presents a rear slot to which there is hinged an enclosing shroud which in its turn receives, and carries hinged thereto, the arms of a fork-shaped element which fits over said ridge, and provides the shutter.

Said fork-shaped element is provided with an engagement seat with which there engage, by bi-lateral engagement, the two lateral arms of that T-shaped enlargement which is close to the coupling seat for the ball joint, the engagement between said engagement seat and said two lateral arms being ensured by an elastically loaded push rod housed within the one-piece body.

As stated, in such known hooks practically all the members associated with the shutter, including the shutter itself but excluding the push rod, are positioned on the one-piece body, behind the coupling seat for the ball joint.

Besides being bulky, said arrangement has the drawback of being constantly exposed to inopportune impacts against parts of agricultural implements during their hooking, and against fixed structures during tractor manoeuvres with the lifting device free.

In this respect, even though the said shroud is intended inter alia to cover said ridge and said fork-shaped shutter, in the presence of said inopportune impacts the shroud can warp, and/or its hinging to the ridge can be damaged, with evident consequences for the operability and safety of the entire system.

Moreover, from the widespread use of said known hook it has emerged that the internal region of the shroud is not adequately protected against infiltration of dirt, such as mud, which within a relatively short time results in malfunction, and hence the need to effect adequate maintenance.

The main object of the present invention is to provide an automatic engagement hook which is able to overcome the aforesaid problems within the context of a simple, rational, reliable and robust construction of small overall size.

Said object is attained by virtue of the characteristics indicated in the claims.

In particular, the hook comprises a hook-shaped one-piece body provided with a coupling seat for a ball joint, and a shutter arranged to partially obstruct, and to completely free, said coupling seat by the effect of elastic positioning means and, respectively, of release means operable from the outside.

According to the invention, the shutter comprises a substantially cylindrical member which is coplanar with said one-piece body, is positioned tangential to the rear region of said coupling seat for the ball joint, and is slidingly received within a housing in the one-piece body in which said elastic means are also received, and at which said release means terminate.

Said release means preferably comprise a flexible cable passing about at least one idle pulley, and having one end fixed to the rear end of said cylindrical member, and its other end coupled to a cap which is removably positioned behind the body of the hook, and is under the control of a control member.

Preferably said housing comprises two mutually communicating cavities, of which one is cylindrical and contains said shutter, and the other contains said release means, and opens into the top rear part of the hook for connecting said release means to said control member.

The shutter is received in the respective cavity by way of seal means, said other cavity being closed by a lateral cover and by said cap, and being provided with at least one grease or oil nipple.

By means of the aforedescribed solution all the objects of the invention are attained.

In this respect, the provision of said housing on the one hand reduces the overall dimensions of the hook, and on the other hand safeguards the integrity of those members associated with the shutter, seeing that these are protected by the one-piece body.

In addition the said housing protects against dirt the said means provided for releasing the shutter, so ensuring the operability of the entire system with time, aided by the presence of said at least one grease or oil nipple.

The constructional characteristics and merits of the invention will be apparent from the ensuing detailed description, given with reference to the figures of the accompanying drawings, which illustrate a preferred embodiment thereof by way of non-limiting example.

Figure 1 is a side elevation of the invention with parts cut away, showing the shutter in its locking configuration.

Figure 2 is a part of the section II-II indicated in Figure 1.

Figure 3 is a view entirely similar to that of Figure 1, but without the cover, and shows a ball joint during its hooking, at the moment in which it is about to pass beyond the shutter.

Figure 4 is a view entirely similar to the preceding and shows the hook in the configuration in which the shutter is maintained temporarily released to enable the ball joint to be extracted.

Figure 5 is a view entirely similar to the preceding and shows the hook in the configuration in which the shutter is deactivated.

Figure 6 shows on a smaller scale an opposite side view of the hook, this latter being without the upper cap for closing the housing.

Figure 7 is a view obtained in the direction VII indicated in Figure 6.

Figure 8 is a front view of the cap.

Figure 9 is the section IX-IX indicated in Figure 8.

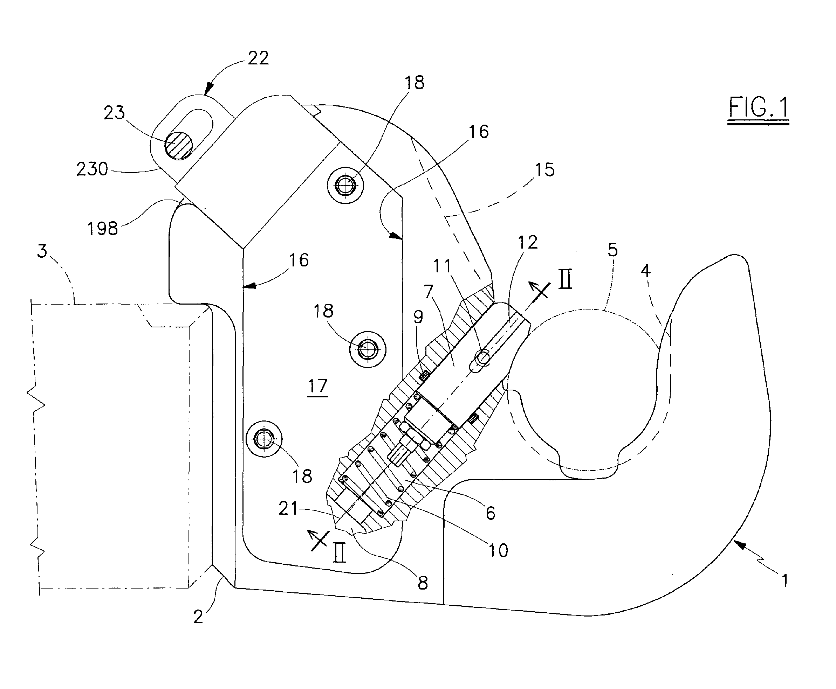

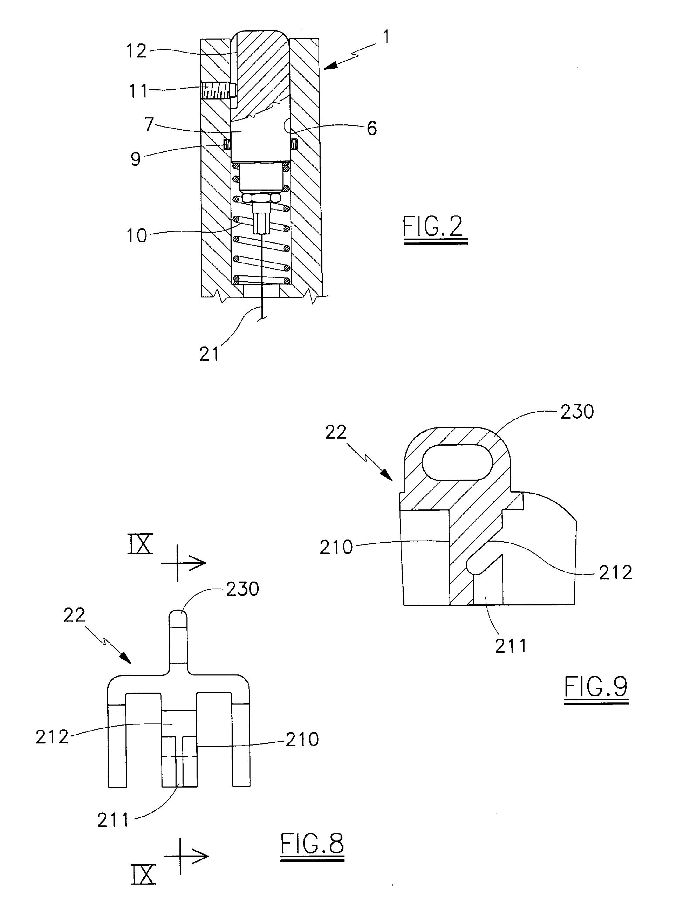

The said figures, and in particular Figures 1 to 7, show a flat steel body obtained by casting then machined by machine tools and treated.

The body 1 has the characteristic hook shape, and presents a rear tapered portion 2 intended to be welded to an arm of a lifting device 3 (indicated schematically by dashed and dotted lines) of an agricultural tractor, and a front coupling seat 4 shaped as a portion of a spherical surface.

Said seat 4 is arranged to receive a usual ball joint 5 of a likewise usual agricultural implement, not shown.

As can be seen, into the region immediately behind said seat 4 there opens a cylindrical bore 6 of different cross-sections which is centered with respect to the thickness of the body 1, and is upperly inclined forwards in such a manner as to intersect a part of the ideal spherical surface defined by the seat 4.

The said bore 6 comprises an upper portion of greater diameter which slidingly receives a cylindrical member 7, and a lower portion of smaller diameter which communicates with the lower end of a rear profiled recess 8 of elongate shape provided in one side of the body 1.

The cylindrical member 7, which forms the shutter for the hook, is inserted into said bore 6 as a precise free-sliding fit, by way of a dust protection gasket 9.

In the illustrated example the seat for the gasket 9 is formed inside said bore 6, but it could evidently be provided in the shutter 7.

It is constantly urged forwards by a rear compressed spring 10, and is guided by a setscrew 11 which is screwed into the body 1, and engages as an exact fit a longitudinal groove 12 provided in the head of the shutter 7.

The said setscrew 11 also acts as an anti-escape member for the shutter 7 when the coupling seat 4 is free.

In that side facing said seat 4, the free end of the shutter 7 presents a sunken portion 13 shaped as a portion of spherical surface having its radius equal to the radius of the seat 4, and an overlying bevel or lead-in 14.

In addition, above the front mouth of the bore 6 the body 1 presents a sunken portion 15 shaped as a portion of spherical surface having a radius greater than that of the seat 4, its purpose being to guide the ball joint 5 during its coupling with the coupling seat 4.

As stated, the lower end of the recess 8 communicates with the bore 6, the said recess 8 opening into that rear region of the body 1 which overlies said portion 2 by which the hook is connected to the lifting device 3.

It should be noted that the upper mouth of said recess 8 is situated in an opposite position to the path followed by the ball joint 5 during its coupling to and release from the seat 4, thus any risk that those members associated with said upper mouth, and described hereinafter, may interfere with the ball joint 5, or with other elements located within the radius of action of the free hook, is practically nullified.

As can be seen, along the lateral mouth of the recess 8 there is a totally extending sunken portion 16, provided to flushly receive a cover 17, which is fixed to the body 1 by three screws 18.

In detail, the upper end of said cover 17 (see Figure 1) is spaced from the rear mouth of the recess 8, for the reasons given hereinafter.

On the inner face of said cover 17 and on the base of the recess 8 there are provided support seats for the ends of the shafts of two small idle pulleys 19 and 20 about which a thin steel cable 21 passes.

At one end the cable 21 is fixed to the rear end of the shutter 7, and at its other end it is coupled to a cap 22 which is associated with the rear mouth of the recess 8, and is provided with an operating puller 23.

As can be seen in Figures 8 and 9, said cap 22 is in the form of a U-piece, of which the crosspiece closes the rear mouth of the recess 8 and the legs straddle said mouth.

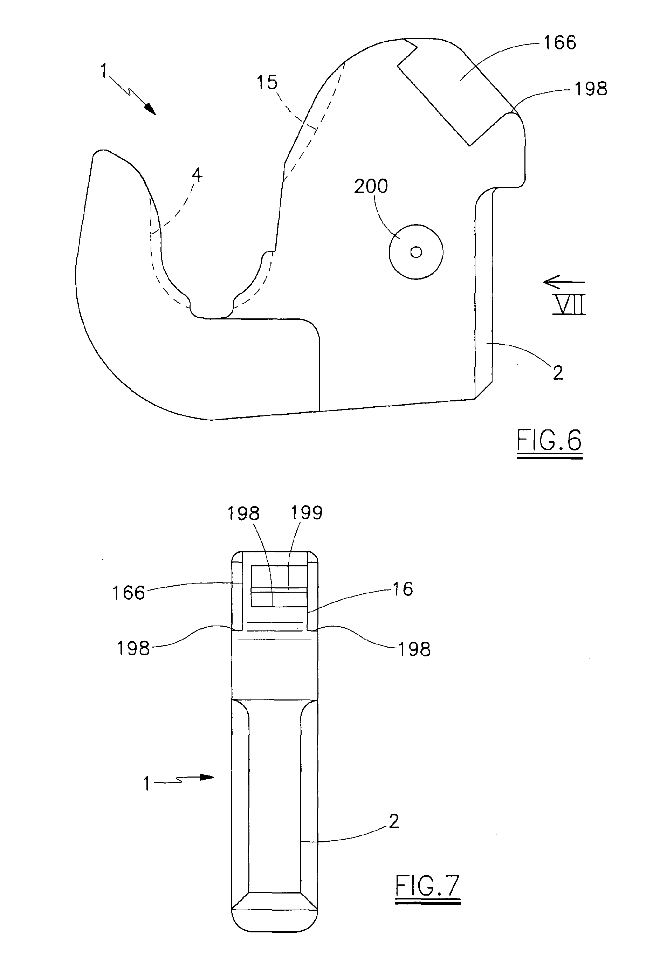

In detail, one of said legs is received flush in that upper part of the sunken portion 16 not occupied by the cover 17, and the other leg is received flush in a sunken portion 166 (see Figures 6 and 7) formed in the opposite side of the body 1.

In addition, said crosspiece of said U-piece presents an outer central slotted lug 230 for coupling said puller 23, and an inner central appendix 210 for coupling the cable 21.

The appendix 210 is provided with a longitudinal groove 211 for passage of the cable 21, and with a transverse recess 212 which intercepts said groove 211 to receive the terminal coupling head 221 of the cable 21.

In addition, at the upper ends of the rear sides of said recess 8 and of said sunken portions 16 and 166 there are provided rounded edges 198, whereas at the upper terminal part of the front side of said recess 8 there is provided a sharp corner 199.

Finally, with the base of the recess 8 there is associated a grease nipple 200 (see Figure 6), or alternatively an oil nipple.

The described hook operates as follows.

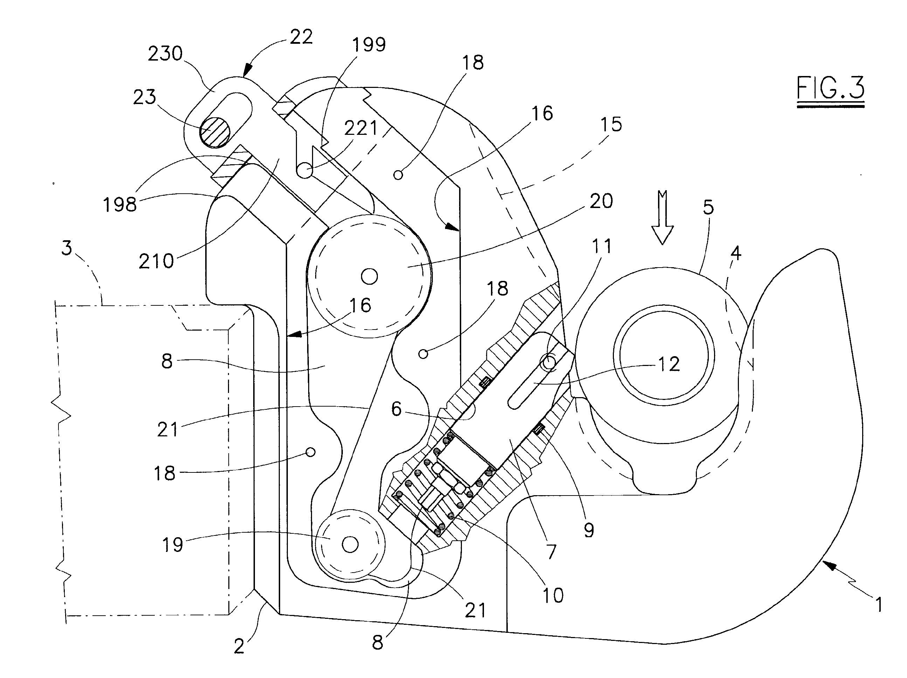

The ball joint 5 couples automatically to the coupling seat as shown in Figure 3, with the ball joint 5 causing the shutter 7 to withdraw against the thrust of the spring 10.

When the ball joint 5 has passed beyond the shutter 7, this latter automatically assumes the locking configuration shown in Figure 1, with the sunken portion 13 of the shutter 7 engaging the facing portion of the ball joint 5.

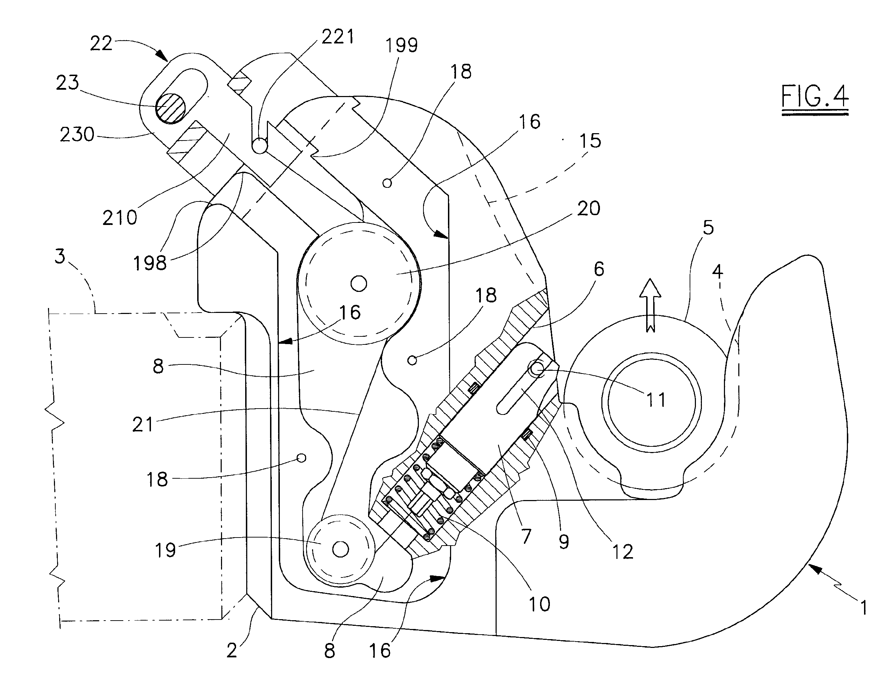

To release the ball joint 5, it is sufficient to withdraw the cap 22 from its seat as shown in Figure 4.

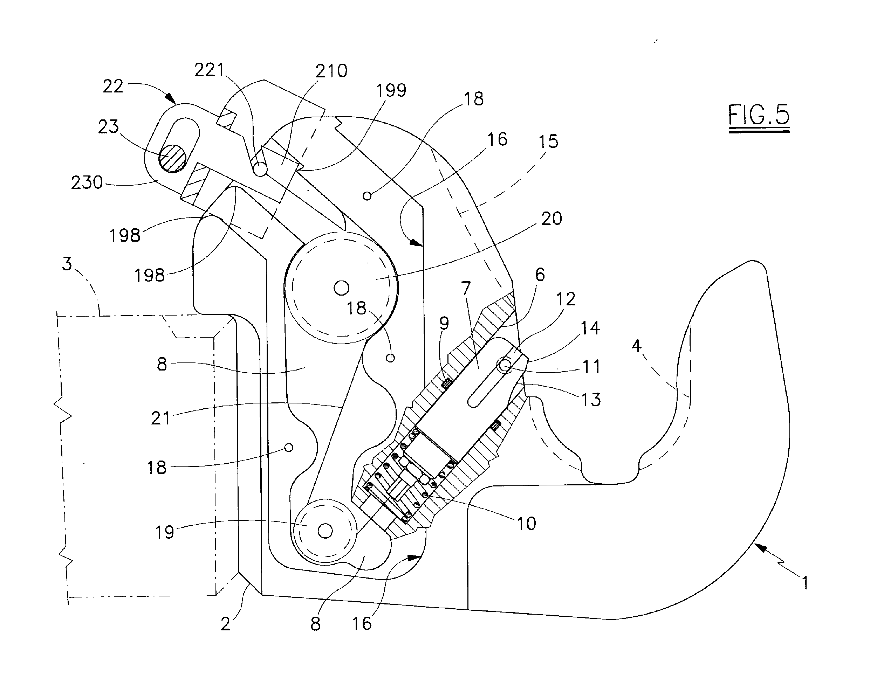

Finally, to deactivate the shutter 7, the previously raised cap 22 is rotated rearwards, about the rounded edges 198, and then released so that its appendix 210 engages the sharp corner 199 (see Figure 5).

By rotating the cap 22 in the opposite direction the shutter 7 is reactivated, and in the absence of the ball joint 5 assumes the position defined by the setscrew 11.

The merits and advantages of the invention are apparent from the aforegoing and from an examination of the accompanying figures.

The invention is not limited to that illustrated and described, but covers all technical equivalents of the invention, and their combinations, if implemented within the context of the following claims.

## Claims

1. An automatic hook for the lifting devices of agricultural tractors, comprising a hook-shaped one-piece body (1) provided with a coupling seat (4) for a ball joint (5); a substantially cylindrical shutter (7) positioned tangential to the rear region of said coupling seat for the ball joint, and arranged to partially obstruct said coupling seat (4) by the effect of elastic positioning means (10); externally operable release means (21, 22) for said shutter; a housing (6, 8) in the one-piece body in which said shutter (7) and said elastic means (10) are received, and at which said release means terminate, **characterised in that** said release means (21, 22) comprise a flexible cable (21) passing about at least one idle pulley, and having one end fixed to the rear end of said shutter, and the other end coupled to a cap (22) which is removably positioned on the body of the hook, and is controlled by a control member (23).

2. A hook as claimed in claim 1, **characterised in that** said cap (22) comprises means for maintaining it stably in a position in which the shutter (7) is in its release configuration, it being retained in the position in which the shutter (7) is in its locking configuration by the elastic means associated with the shutter.

3. A hook as claimed in claim 2, **characterised in that** said means comprise an abutment (199) rigid with the one-piece body, against which the cap (22) rests when in an inclined position.

4. A hook as claimed in claim 1, **characterised in that** said cap (22) is shaped as a U-piece, of which the legs are received in respective lateral recesses provided in the sides of the one-piece body (1), and the crosspiece is provided with an inner central appendix (210) for coupling the cable (21).

5. A hook as claimed in claims 3 and 4, **characterised in that** said central appendix (210) rests on said abutment when the shutter (7) is in its release configuration and said cap (22) is inclined.

6. A hook as claimed in claim 1, **characterised in that** at the top of said cylindrical shutter there are provided, **in that** side facing said coupling seat, a sunken portion (13) shaped as a portion of spherical surface having its radius equal to that of the ball joint (5), and an overlying bevelled portion (14).

7. A hook as claimed in claim 1, **characterised in that** said elastic means comprise a compressed spring (10) associated with said cylindrical shutter (7).

8. A hook as claimed in claim 1, **characterised in that** said housing (6, 8) comprises two communicating cavities, of which one (6) is cylindrical and contains said shutter (7) and said spring (10), and the other (8) contains said release means (21, 22), and opens into the top rear part of the hook for connecting said cap (22) to said control member (23).

9. A hook as claimed in claim 8, **characterised in that** said cylindrical shutter (7) is inserted into said one cavity (6) by way of at least one dust protection gasket (9).

10. A hook as claimed in claim 8, **characterised in that** said one cavity (6) is provided with anti-rotation means and with anti-withdrawal means for said cylindrical shutter (7).

11. A hook as claimed in claim 10, **characterised in that** said anti-rotation means and said anti-withdrawal means are provided by a threaded push rod (11) which is screwed into said one-piece body (1), and engages a longitudinal groove (12) in said cylindrical shutter (7).

12. A hook as claimed in claim 8, **characterised in that** said other cavity (8) is closed laterally by an inserted cover (17), and rearwards by said cap (22).

13. A hook as claimed in claim 8, **characterised in that** said other cavity (8) is provided with at least one grease or oil nipple (200).

14. A hook as claimed in claim 1, **characterised in that** that region of the one-piece body (1) situated above the free end of said cylindrical shutter (7) presents a sunken portion (15) shaped as a portion of spherical surface having a radius greater than that of said coupling seat (4), and acting as a guide for the ball joint (5) during its coupling with this latter.

15. A lifting device typically for agricultural tractors, **characterised by** being provided with at least one hook in accordance with claims 1 to 14.
